# EUROPEAN PATENT APPLICATION

(11) **EP 4 823 130 A1**
(43) Date of publication of application: **14.10.2026**
(21) Application number: 26168817.0
(22) Date of filing: 30.03.2026
(51) Int. Cl.: H04W 4/40, B60D 1/36, B62D 53/12

(54) **METHOD AND SYSTEM FOR IDENTIFICATION OF A PROPER COUPLING BETWEEN A TOWING VEHICLE AND A TRAILING VEHICLE**

(30) Priority: 08.04.2025 IN 202541034294
(71) Applicant: ZF CV Systems Global GmbH, 3006 Bern (CH)
(72) Inventor: NIZAMUDDEEN, Imaduddeen, 631001 VELLORE (IN)
(74) Representative: ZF Friedrichshafen AG

(57) **Abstract**

The invention relates to a method (300) for identification of a proper coupling between a towing vehicle (12) and a trailer vehicle (14). The method (300) comprise the steps of receiving (304) truck data (24) from a truck telematics device (20) of the towing vehicle (12) by the remote central unit (16) and receiving (306) trailer data (26) from a trailer telematics device (22) of the trailer vehicle (14) by the remote central unit (16). The method (300) further comprise the step of detecting (312, 316), by the remote central unit (16), a proper coupling (310) between the towing vehicle (12) and the trailer vehicle (14) and preferably detecting an improper coupling (314) between the towing vehicle (12) and the trailer vehicle (14).

The invention further relates to a remote central unit (16), a trailer vehicle (14) comprising a trailer telematics device (22), a towing vehicle (12) comprising a truck telematics device (20), a combination (200) comprising a trailer vehicle (14) and a towing vehicle (12), a system (10) comprising a remote central unit (16) and a computer program product, comprising instructions.

## Description

### TECHNICAL FIELD

The invention relates to the field of commercial vehicles and in particular to a coupling between a towing vehicle and a trailer vehicle.

### BACKGROUND

A towing vehicle, like a truck, is used to couple and move a trailer vehicle. The towing vehicle and the trailer vehicle are preferably each configured as a commercial vehicle. Towing vehicles referred to herein are for example semi-trailer tractors, which are also referred to as trucks. Trailer vehicles referred to herein are preferably semi-trailers, which are also referred to as trailers.

According to the prior art, several connections are predominantly made when coupling or uncoupling a trailer vehicle to a towing vehicle. Usually, a mechanical connection, which can also be called a towing connection, is first realized between the towing vehicle and the trailer vehicle with the aid of a mechanical coupling. In addition to the towing connection, further connections, namely pneumatic and electrical connections, must be established between the towing vehicle and the trailer vehicle in order to enable various functions of a towing vehicle and a trailer vehicle combination and to make the combination ready for driving.

The above-mentioned connection between a trailer vehicle and a towing vehicle is made by a driver. The driver must know exactly which trailer to couple, especially at yards, like storage yards, where several trailers are available. For identification purposes, for example, order data is prepared in paper form for the driver. The order data includes, for example, unique identifier of the trailer, such as a license plate or a designation that is attached to outside of the trailer.

Moreover, a large number of systems are known that recognize a connection between a trailer and a towing vehicle after a connection has been established. An established connection is for example communicated to a higher level remote central unit, for example, a cloud service. For this purpose, trailer vehicles and/or towing vehicles include so called telematics systems or devices to send their status to the remote central unit. It is known from document US 10,173,486 B1 that trailers with their telematics device send location data to the remote central unit and based on a first location of a towing vehicle a score is calculated, which estimates a measure of association of the trailer with the towing vehicle. Consequently, based on the score, one trailer is associated with the towing vehicle indicating that a trailer with a defined score is physically coupled with the towing vehicle.

Fleet operators can thus monitor a coupling status. For example, the fleet operator can dial into the remote central unit and retrieve the data indicating the coupling status and in particular, that the correct trailer was coupled. Depending on the frequency, with which such coupling statuses between trailer and towing vehicle are checked, incorrectly coupled trailers are sometimes detected late. The fleet operator then has the option to contact the driver, for example via a mobile phone and report the error. Such errors can also be detected at the exit gate of a fleet or yard, if it becomes apparent that an incorrect trailer has been coupled. However, resetting the incorrectly coupled trailer and finding and coupling the correct trailer takes a lot of time and is laborious.

### DETAILED DESCRIPTION

The purpose of the present invention is therefore to overcome the problems of the prior art. In particular, a possibility is to be found to identify an incorrectly coupled trailer as early as possible. In any case, an alternative to the known prior art is to be identified.

The invention thus relates to a method for identification of a proper truck trailer coupling according to claim 1.

According to a first aspect of the invention, the invention is directed to a method with which a coupling between a towing vehicle, for example a truck, and a trailer vehicle, for example a trailer or a semi-trailer, is identified. In particular, it is identified that the coupling is a proper coupling.

According to the method in a step, a remote central unit receives truck data from a truck telematics device of the towing vehicle. The truck data comprise an identification of the towing vehicle and first truck information. The first truck information is indicative of a status of the towing vehicle. In a further step, the remote central unit receives trailer data from a trailer telematics device of the trailer vehicle. The trailer data comprise an identification of the trailer vehicle and first trailer information. The first trailer information is indicative of a brake air status of the trailer vehicle. Thus, a remote central unit, which is remote from the towing vehicle and the trailer vehicle and which is for example a central server of a cloud system or another part of the cloud system, receives, in particular via long distance transmission or remote transmission, the truck information and the trailer information.

In an additional step, the remote central unit detects a proper coupling between the towing vehicle and the trailer vehicle, if during a check the truck data and the trailer data meet predefined requirements. Preferably an improper coupling between the towing vehicle and the trailer vehicle is detected as long as, in particular during the check, the predefined requirements are unmet by the truck data and/or the trailer data.

Preferably, the remote central unit comprises a data base, which is for example provided by a fleet manager or fleet management system. The data base comprises data comprising datasets each comprising an identification of one towing vehicle and an identification of one trailer vehicle. The or each dataset comprises the two vehicles for which a coupling is expected or wanted. For example, a fleet management system provides an identification number of a trailer and an identification number of a truck, which should be coupled as a dataset. Verification is thus based on this information and on the information received from the truck and the trailer. The check is thus executed for the two vehicles, in particular the truck data and the trailer data of the two vehicles in a dataset.

The term "truck data" refers to information received from the towing vehicle, including its identification and status. "Trailer data" refers to information received from the trailer vehicle, including its identification and brake air status. The "remote central unit" is a central system that processes the data from both the towing and trailer vehicles to determine if they are properly coupled. "Predefined requirements" are specific criteria that the truck data and trailer data must meet to confirm a proper coupling. Meeting the requirements means, that the truck data and the trailer data meet conditions set by the requirements. If the truck data and the trailer data meet the requirements during the check, a proper coupling between the towing vehicle and a trailer vehicle is detected. If the truck data or the trailer data do not meet the requirements during the check, an improper coupling between the towing vehicle and a trailer vehicle is detected.

The advantages of the invention include ensuring the safety and reliability of the connection between the towing vehicle and the trailer vehicle by verifying that both vehicles are coupled or uncoupled. The invention meet specific criteria before confirming a proper coupling. This reduces the risk of accidents or malfunctions due to improper coupling.

The invention is based on the observation that if a status of the towing vehicle indicates that it is in operation and can thus provide compressed air for a trailer and at the same time a changing compressed air level or value of the trailer vehicle, which occurs after the trailer is connected to the towing vehicle, is a clear indication that the trailer is being coupled properly. In contrast to a coupling status only through GPS coordinates as mentioned in the state of the art, the invention considers the behavior internal to the vehicles. Incorrectly detected couplings which are challenging or impossible to avoid when coupling status is only based on GPS can thus be further reduced.

According to a development, the remote central unit provides information for the towing vehicle in the case of an identification of a proper coupling to executed an action by the towing vehicle. Preferably, the action is an activation of an indicator for a driver, preferably in a display.

According to a further development, the first truck information comprises at least one first value and/or corresponds to consecutive first truck values. The first trailer information comprises at least one trailer brake air pressure values and/or corresponds to consecutive trailer brake air pressure values. Further, the predefined requirements are further detailed to include one or more of a first truck value threshold value and various parameters related to the trailer brake air pressure, such as a trailer brake air pressure threshold value, a trailer brake air pressure slope value, or a trailer brake air pressure amount.

According to this development, the requirements are considered met if, during the check, a first condition is fulfilled, namely the first truck values are on or above the first truck value threshold value. Additionally, one or more of the following conditions must be satisfied: the trailer brake air pressure values rise over the trailer brake air pressure threshold value, the trailer brake air pressure values rise with a slope value above the trailer brake air pressure slope value, or the trailer brake air pressure values rise more than the trailer brake air pressure amount. If these conditions are not met during the check, the requirements are considered unmet.

The first truck value threshold value, the trailer brake air pressure threshold value, the trailer brake air pressure slope value and the trailer brake air pressure amount are preferably predefined values, wherein one or more of these values are preferably stored in the remote central unit or can be retrieved by the remote central unit from a storage outside the remote central unit.

This development specifies the criteria for evaluating the data received from the truck telematics device and the trailer telematics device, providing a more detailed framework for determining whether the coupling between the towing vehicle and the trailer vehicle is proper or improper. The introduction of threshold values, slope values, and specific amounts for the trailer brake air pressure adds a layer of precision to the method, ensuring that the evaluation is based on quantifiable and measurable parameters.

In a further development, the first truck information comprises at least one or correspond to at least one first truck value. The first trailer information correspond to pressure behavior information. The pressure behavior information indicating that a trailer brake air pressure value rises over a trailer brake air pressure threshold value or a trailer brake air pressure value rises with a slope above a trailer brake air pressure slope value or a trailer brake air pressure value rises more than a trailer brake air pressure amount or a trailer brake air pressure value behaves different from rising over the trailer brake air pressure threshold value, rising with a slope above the trailer brake air pressure slope value or rising more than the trailer brake air pressure amount.

The first truck value threshold value, the trailer brake air pressure threshold value, the trailer brake air pressure slope value and the trailer brake air pressure amount are preferably predefined values, wherein one or more of these values are preferably stored in the trailer telematics device or can be retrieved by the trailer telematics device from a storage outside the trailer telematics device.

The requirements are met when, during the check, according to a first condition, the first truck value is on or above the first truck value threshold value and, according to an additional condition, the pressure behavior information indicating that the trailer brake air pressure value rises over the trailer brake air pressure threshold value, rises with a slope above a trailer brake air pressure slope value or rises more than the trailer brake air pressure amount. The requirements are unmet, when the first truck value is below the first truck value threshold value and/or the pressure behavior information indicating that the trailer brake air pressure value behaves different from rising over the trailer brake air pressure threshold value, rising with a slope above the trailer brake air pressure slope value or rising more than the trailer brake air pressure amount.

Thus, the first truck information corresponds to a first truck value, which is a parameter that must meet or exceed a predefined threshold for a proper coupling to be detected. The first trailer information is more detailed, focusing on the pressure behavior of the trailer's brake air system. The development outlines several conditions under which the trailer brake air pressure is evaluated. These conditions include the pressure value rising over a specific threshold, the pressure value increasing with a slope above a certain value, or the pressure value rising more than a specified amount. Additionally, it considers scenarios where the pressure value is zero or behaves differently from the specified conditions.

This development, in contrast to the previous development, shifts the testing of the values recorded by the trailer vehicle with the threshold values to the trailer. Accordingly, the trailer telematics device only sends information indicating that the corresponding threshold values have been exceeded or not reached. The amount of data that has to be transferred from the trailer telematics device to the remote central unit can thus be reduced.

In a further development, the first truck value corresponds to a combustion engine speed value and the first truck value threshold value corresponds to an engine speed threshold value. Alternatively, the first truck value corresponds to a pressure value of a truck brake air supply or a truck brake air supply reservoir and the first truck value threshold value corresponds to a truck air brake air threshold value. Moreover, the trailer brake air pressure value corresponds to a pressure value in a trailer brake air supply or a trailer brake air supply reservoir.

This development further focuses on the parameters used to determine the proper coupling between a towing vehicle and a trailer vehicle. The development specifies that the first truck value, which is part of the truck data received from the truck telematics device of the towing vehicle, can correspond to a combustion engine speed value. This implies that the system monitors the engine speed of the towing vehicle as a parameter to assess the status of the vehicle. Additionally, the development introduces the concept of a first truck value threshold value, which corresponds to an engine speed threshold value. This threshold value serves as a benchmark against which the actual engine speed is compared to determine if the predefined requirements for proper coupling are met.

Furthermore, the development provides an alternative parameter where the first truck value corresponds to a pressure value of a truck brake air supply or a truck brake air supply reservoir. In this context, the first truck value threshold value corresponds to a truck air brake air threshold value. This indicates that the system also considers the pressure in the truck's brake air system as a critical factor in determining the status of the towing vehicle.

The development also addresses the trailer vehicle by specifying that the trailer brake air pressure value corresponds to a pressure in a trailer brake air supply or a trailer brake air supply reservoir. This detail highlights that the system evaluates the brake air pressure of the trailer vehicle as part of the trailer data received from the trailer telematics device.

The introduction of engine speed and brake air pressure as critical parameters allows for a more comprehensive evaluation of the vehicles' statuses. In particular the parameters engine speed and pressure value of a brake air supply or a truck brake air supply reservoir can be monitored to clearly determine whether the towing vehicle is in operation, i.e. the engine is running, which automatically provides brake pressure, or the brake pressure can be monitored directly. Therefore, if increasing brake pressure is detected in the trailer vehicle without the towing vehicle being in operation, it can be assumed that a different or incorrect towing vehicle is providing the operating pressure for the trailer, so that an incorrect coupling is clearly detected.

According to a further development, the first truck information further comprise at least a second truck value. The second truck value corresponds to a driving speed value of the towing vehicle. The driving speed value is for example measured or determined with a wheel speed sensor or a GPS-system of the towing vehicle. Further, the predefined requirements comprise a second truck value threshold value which corresponds to zero. The requirements are met, if during the check the second truck value correspond to the second truck value threshold value. Thus, the requirements are only met when the driving speed of the towing vehicle is zero or in other words the towing vehicle is stationary. Consequently, the requirements are unmet, when the second truck value is different from the second truck value threshold value, namely when the towing vehicle is in motion.

This development is based on the realization that a towing vehicle that is moving cannot be a towing vehicle, that can be coupled to a trailer vehicle at the moment it is moving, i.e. while a check of a proper coupling is being carried out. Therefore, a proper coupling between a towing vehicle and a trailer vehicle is only identified, if the requirement is met that the towing vehicle stands still. Incorrectly detected couplings can thus be further reduced.

In a further development, the truck data comprise second truck information indicative of a at least one truck time stamp and the trailer data comprise second trailer information indicative of at least one trailer time stamp. Each truck time stamp is assigned to the first truck information or one of the first truck values within that first truck information, while each trailer time stamp is assigned to the first trailer information or to one of the trailer air brake pressure values within that information.

This enhancement brings a temporal dimension to the data being received and processed by the remote central unit. The inclusion of time stamps allows for a more precise and reliable correlation between the data from the towing vehicle and the trailer vehicle. By associating specific time stamps with the truck and trailer data, the system can ensure that the information being analyzed corresponds to the same time frame, thereby reducing the likelihood of errors due to asynchronous data. This is particularly useful in dynamic environments where the status of the towing vehicle and trailer vehicle can change rapidly. The time stamps provide a mechanism to verify that the data being compared is contemporaneous, which is crucial for accurately determining whether the predefined requirements for a proper coupling are met. Furthermore, the use of time stamps can aid in diagnosing issues related to improper coupling by providing a historical record of the data at specific times, which can be invaluable for troubleshooting and analysis.

This development enhances the robustness and reliability of the method by ensuring that the data used in the decision-making process is temporally aligned, thereby improving the accuracy of the coupling detection. Additionally, the time stamps can facilitate more sophisticated data analysis techniques, such as trend analysis or predictive modelling, which can further improve the system's ability to detect and respond to coupling issues.

In a further development, the truck data comprise third truck information indicative of a at least one truck location and the trailer data comprise third trailer information indicative of at least one trailer location. The requirements are met when during the check a distance between at the at least one truck location and the at least one trailer location is below, or preferably on, a predefined distance value. In contrast, the requirements are unmet when during the check a distance between the at least one truck location and the at least one trailer location is above a predefined distance value. The predefined distance value is preferably below 50 meters, below 40 meters, below 30 meters or below 20 meters.

The truck data now include third truck information indicative of at least one truck location, while the trailer data include third trailer information indicative of at least one trailer location. This new feature brings a spatial dimension to the coupling identification process by incorporating the physical locations of both the towing vehicle and the trailer vehicle.

If the distance exceeds this predefined value, the requirements are considered unmet. This enhancement ensures that the method not only relies on the status information of the vehicles but also on their relative spatial positions, thereby adding an additional layer of verification to ensure the accuracy and reliability of the coupling identification process. The inclusion of location data helps in preventing potential mismatches or improper couplings that could occur if the vehicles are not in close proximity to each other, even if their status information appears to be correct. This spatial verification mechanism enhances the robustness of the method by ensuring that the towing vehicle and the trailer vehicle are physically close enough to be considered properly coupled, thereby reducing the risk of errors that could lead to operational inefficiencies.

In a further development, the third truck information is provided by a global navigation satellite system receiver, GPSS-receiver, like a global position system receiver, GPS-receiver, of the towing vehicle. The third trailer information is provided by a global navigation satellite system receiver, GPSS-receiver, like a global position system receiver, GPS-receiver, of the trailer vehicle.

By incorporating global navigation satellite system receivers into both the towing vehicle and the trailer vehicle, the method gains the ability to utilize precise location data as part of the information exchanged between the vehicles and the remote central unit. This location data can be critical for accurately determining the relative positions of the towing vehicle and the trailer vehicle, thereby enhancing the reliability and accuracy of the coupling identification process.

The use of GPS-receivers allows for real-time tracking and monitoring of the vehicles' positions, which can be particularly useful in dynamic environments where the vehicles may be moving or where multiple vehicles are present. This feature can also facilitate the detection of improper couplings by providing additional data points that can be cross-referenced with other truck and trailer data to ensure that the predefined requirements for a proper coupling are met.

In a further development, the check is executed in time intervals, preferably predefined intervals, continuously or when first trailer information are received that indicate a rising trailer brake air pressure value.

The predefined intervals ensure that checks are performed regularly, maintaining consistent oversight. Continuous execution of the check offers real-time monitoring, which is crucial for immediate detection of any issues with the coupling. The condition that triggers the check upon receiving trailer information indicating a rising trailer brake air pressure value adds a layer of responsiveness to specific changes in the trailer's status, ensuring that any potential issues related to brake air pressure are promptly addressed.

According to a second aspect of the invention, a remote central unit is provided which is arranged to execute steps according to any of the developments of the first aspect. The steps include the reception of truck data from a truck telematics device of the towing vehicle and the reception of trailer data from a trailer telematics device of the trailer vehicle. These data transmissions occur between the telematics devices and the remote central unit. Preferably, the remote central unit thus comprises means for receiving the transmissions.

The truck data comprises an identification of the towing vehicle and first truck information indicative of the status of the towing vehicle, while the trailer data comprises an identification of the trailer vehicle and first trailer information indicative of the brake air status of the trailer vehicle. The remote central unit processes these data sets to detect a proper coupling if the truck data and trailer data meet predefined requirements. Preferably, the remote control unit thus comprises a processing means.

By stating that the remote central unit is arranged to execute these steps, the aspect underscores the importance of the central unit's configuration and programming in achieving the desired functionality. This arrangement ensures that the central unit is not merely a passive receiver of data but an active participant in the identification process, capable of making determinations based on the received data.

According to a third aspect of the invention, a trailer vehicle is provided. The trailer vehicle comprising a trailer telematics device for providing trailer data for a remote central unit, preferably according to the second aspect. The trailer data comprising first trailer information indicative of brake air status of the trailer vehicle. Further, the trailer vehicle comprises a pressure sensor to provide brake air pressure values corresponding to a pressure in a trailer brake air supply or a trailer brake air supply reservoir as the first trailer information, namely to the remote central unit. Alternatively, the pressure sensor is arranged to provide the brake air pressure values corresponds to a pressure in a trailer brake air supply or a trailer brake air supply reservoir to an electronic control unit of the trailer vehicle. The electronic control unit is arranged for providing pressure behavior information as the first trailer information based on the brake air pressure values.

Consequently, in one scenario, the pressure values themselves serve directly as the first trailer information. Alternatively, the pressure values are communicated to an electronic control unit within the trailer vehicle. This electronic control unit is designed to process the brake air pressure values and subsequently provide pressure behavior information as the first trailer information. This processing capability of the electronic control unit introduces an additional layer of data analysis and interpretation, allowing for more sophisticated monitoring of the trailer's brake air status.

According to a forth aspect of the invention, a towing vehicle is provided. The towing vehicle comprising a truck telematics device for providing truck data for a remote central unit, preferably according to the second aspect. The truck data comprising first truck information indicative of status of the towing vehicle. The towing vehicle comprises a pressure sensor to provide brake air pressure values corresponds to a pressure in a truck brake air supply or a truck brake air supply reservoir as the first truck information, namely the truck status, or a combustion engine speed sensor to provide combustion engine speed values corresponding to the first truck information, namely the truck status.

These specific sensors enhance the accuracy and reliability of the truck data by offering precise and relevant information about the towing vehicle's status. The pressure sensor ensures that the brake air pressure values are accurately monitored, which is crucial for determining the proper coupling between the towing vehicle and the trailer vehicle. Alternatively, the combustion engine speed sensor provides essential data regarding the engine's operational status, further contributing to the overall assessment of the towing vehicle's condition.

According to a forth aspect of the invention, a combination comprising a trailer vehicle according to third aspect and a towing vehicle according to forth aspect.

According to a fifth aspect of the invention, a system comprising a remote central unit according to the second aspect and a trailer vehicle according to third aspect or a towing vehicle according to the forth aspect.

According to a sixth aspect of the invention, a computer program product is provided. The computer program product comprises instructions, when executed on a processor, in particular of a remote central according to the second aspect, cause the processor to execute the method according to the first aspect.

Further advantages, features and details of the invention result from the following description of the preferred embodiments as well as from the drawings, which show in:
- Fig. 1: an embodiment of the system and
- Fig. 2: steps of a method according to an embodiment.

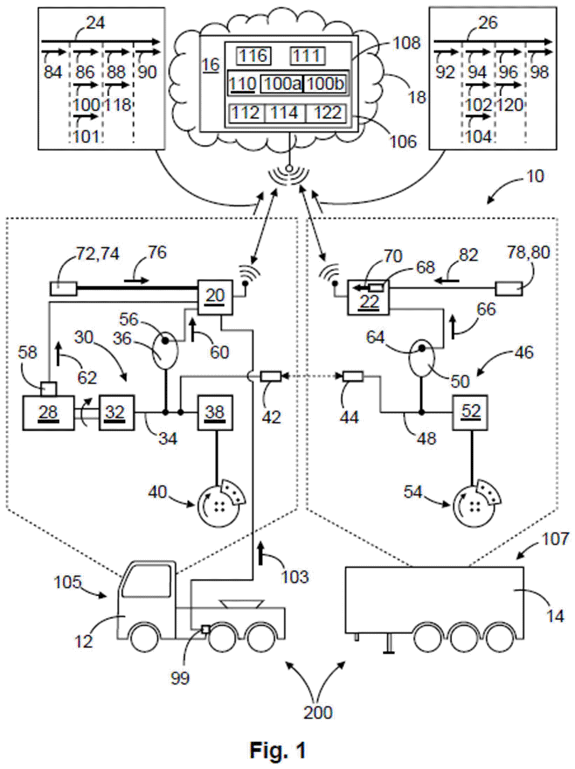

Fig. 1 discloses an embodiment of system 10 comprising a combination 200 of a towing vehicle 12, namely a truck, a trailer vehicle 14, namely a trailer, and a remote central unit 16, which is a cloud server 18. The truck 12 comprises a truck telematics device 20 and the trailer 14 comprises a trailer telematics device 22. The remote central unit 16 is arranged to receive truck data 24 from the truck telematics device 20 and trailer data 26 from the trailer telematics device 22.

The towing vehicle 12 comprises a combustion engine 28 and a truck air pressure brake system 30. The truck air pressure brake system 30 comprises a truck compressor 32, which is driven and thus operated by the combustion engine 28. As long as the combustion engine 28 and thus the truck compressor 32 are operated, pressurized air is output in a brake air supply 34 to which a brake air supply reservoir 36 is fluidly connected. A truck brake control unit 38 operates air brakes 40 of the towing vehicle 12 with the compressed air in the in brake air supply 34 and the brake air supply reservoir 36. Further, a compressed air truck connector 42 is provided for providing pressurized air from the brake air supply 34 and the brake air supply reservoir 36 to a compressed air trailer connector 44 of a trailer air pressure brake system 46 of the trailer vehicle 14 when connected.

The trailer air pressure brake system 46 receives the pressurized air and fills with a trailer brake air supply 48 a trailer brake air supply reservoir 50. A trailer brake control unit 52 operates air brakes 54 of the trailer vehicle 14 with the compressed air in the in trailer brake air supply 48 and the trailer brake air supply reservoir 50.

In the towing vehicle 12 a truck pressure sensor 56 is provided in the truck brake air supply reservoir 36. Further, in the towing vehicle 12 a combustion engine speed sensor 58 is provided to measure the speed of the combustion engine 28. The truck pressure sensor 56 is connected to the truck telematics device 20 for providing brake air pressure values 60 and the combustion engine speed sensor 58 is connected to the truck telematics device 20 for providing combustion engine speed values 62.

In the trailer vehicle 14 a trailer pressure sensor 64 is provided in the trailer brake air supply reservoir 50. The trailer pressure sensor 64 is connected to the trailer telematics device 22 for providing trailer brake air pressure values 66. Further, an electronic control unit 68 is provided in the trailer telematics device 22, which can receive and process the trailer brake air pressure values 66 according to a special embodiment and is arranged for providing pressure behavior information 70. The electronic control unit 68 is optional.

Moreover, the towing vehicle 12 comprises a global navigation satellite system receiver 72, namely a global position system receiver 74 for providing a truck location 76 to the truck telematics device 20. Also, the trailer vehicle 14 comprises a global navigation satellite system receiver 78, namely a global position system receiver 80 for providing a trailer location 82 to the trailer telematics device 22.

The remote central unit 16 is arranged to receive the truck data 24 and the trailer data 26. The truck 24 data comprises an identification 84 of the towing vehicle 12, first truck information 86, second truck information 88 and third truck information 90. The trailer data 26 comprises an identification 92 of the trailer vehicle 14, first trailer information 94, second trailer information 96 and third trailer information 98. The first truck information 86 corresponds to first truck values 100 and second truck values 101. The first trailer information 94 corresponds to trailer brake air pressure values 102 and/or pressure behavior information 104. The first truck values 100 indicate a status 105 of the truck. The second truck values 101 indicate a driving speed value 103 measured with a wheel speed sensor 99. The trailer brake air pressure values 102 and/or pressure behavior information 104 indicate a brake air status 107 of the towing vehicle 12, in particular the brake system 46 of the towing vehicle 12. The second truck information 88 comprise one or more truck time stamps 118 and the second trailer information 96 comprise one or more trailer time stamps 120.

The remote central unit 16 comprises a storage 106, which stores different predefined requirements 108. The requirements 108 comprise a first truck value threshold value 110, which is an engine speed threshold value 110a or a truck air brake air threshold value 110b. Moreover, the requirements 108 comprise a second truck value threshold value 111 which is zero. Further requirements 108 can be a trailer brake air pressure threshold value 112, a trailer brake air pressure slope value 114 or a trailer brake air pressure amount 116. One further requirement is a distance value 122.

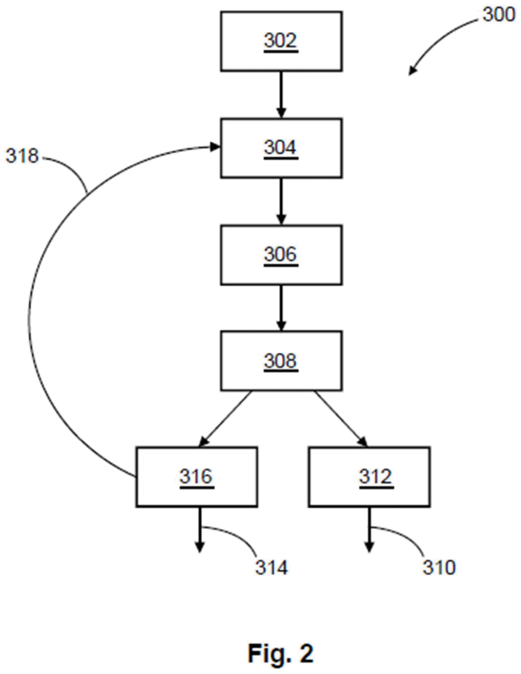

The requirements 108 are used in a check step during the method for identification of a proper coupling between a towing vehicle 12 and a trailer vehicle 14, which is shown in fig. 2.

Fig. 2 shows the steps of a method 300 according to an embodiment. In step 302 the remote central unit 16 loads requirements 108 from a storage. In step 304 truck data 24 from a truck telematics device 20 is received by the remote central unit 16. In step 306 trailer data 26 from a trailer telematics 22 is received by the remote central unit 16. A check in step 308 is executed by the remote central unit 16. During the check in step 308 the remote central unit 16 checks if the truck data 24 and the trailer data 26 meet the requirements 108. Meeting the requirements 108 means, that the truck data 24 and the trailer data 26 meet conditions set by the requirements 108. If the truck data 24 and the trailer data 26 meet the requirements 108 during the check, a proper coupling 310 between the towing vehicle 12 and a trailer vehicle 14 is detected in step 312. If the truck data 24 or the trailer data 26 do not meet the requirements 108 during the check, an improper coupling 314 between the towing vehicle 12 and a trailer vehicle 14 is detected in step 316. Steps 304, 306 and 308 are thus repeated after a time interval 318.

### List of reference signs (Part of the description)

- 10: embodiment of system
- 12: towing vehicle
- 14: trailer vehicle
- 16: remote central unit
- 18: cloud server
- 20: truck telematics device
- 22: trailer telematics device
- 24: truck data
- 26: trailer data
- 28: combustion engine
- 30: truck air pressure brake system
- 32: truck compressor
- 34: brake air supply
- 36: brake air supply reservoir
- 38: truck brake control unit
- 40: air brakes
- 42: compressed air truck connector
- 44: compressed air trailer connector
- 46: trailer air pressure brake system
- 48: trailer brake air supply
- 50: trailer brake air supply reservoir
- 52: trailer brake control unit
- 54: air brakes
- 56: truck pressure sensor
- 58: combustion engine speed sensor
- 60: brake air pressure values
- 62: combustion engine speed values
- 64: trailer pressure sensor
- 66: trailer brake air pressure values
- 68: electronic control unit
- 70: pressure behavior information
- 72: global navigation satellite system receiver
- 74: global position system receiver
- 76: truck location
- 78: global navigation satellite system receiver
- 80: global position system receiver
- 82: trailer location
- 84: identification of the towing vehicle
- 86: first truck information
- 88: second truck information
- 90: third truck information
- 92: identification of the trailer vehicle
- 94: first trailer information
- 96: second trailer information
- 98: third trailer information
- 99: wheel speed sensor
- 100: first truck values
- 101: second truck values
- 102: trailer brake air pressure values
- 103: driving speed value
- 104: pressure behavior information
- 105: status
- 106: storage
- 107: brake air status
- 108: predefined requirements
- 110: first truck value threshold value
- 110a: engine speed threshold value
- 110b: truck air brake air threshold value
- 111: second truck value threshold value
- 112: trailer brake air pressure threshold value
- 114: trailer brake air pressure slope value
- 116: trailer brake air pressure amount
- 118: truck time stamps
- 120: trailer time stamps
- 122: distance value
- 200: combination
- 300: method
- 302: remote central unit loads requirements from a storage
- 304: truck data is received by remote central unit
- 306: trailer data is received by remote central unit
- 308: remote central unit checks if truck data and trailer data meet requirements
- 310: proper coupling
- 312: proper coupling between towing vehicle and trailer vehicle is detected
- 314: improper coupling
- 316: improper coupling between towing vehicle and trailer vehicle is detected
- 318: time interval

## Claims

1. Method (300) for identifying a proper coupling between a towing vehicle (12) and a trailer vehicle (14) comprising the following steps:
a) receiving (304) truck data (24) from a truck telematics device (20) of the towing vehicle (12) by a remote central unit (16), wherein the truck data (24) comprise an identification (84) of the towing vehicle (12) and first truck information (86) indicative of a status (105) of the towing vehicle (12),
b) receiving (306) trailer data (26) from a trailer telematics device (22) of the trailer vehicle (14) by the remote central unit (16), wherein the trailer data (26) comprise an identification (92) of the trailer vehicle (14) and first trailer information (94) indicative of a brake air status (107) of the trailer vehicle (14),
c) detecting (312, 316), by the remote central unit (16),
a proper coupling (310) between the towing vehicle (12) and the trailer vehicle (14) if during a check the truck data (24) and the trailer data (26) meet predefined requirements (108) and
preferably, detecting an improper coupling (314) between the towing vehicle (12) and the trailer vehicle (14) as long as the predefined requirements (108) are unmet by the truck data (24) and/or the trailer data (26).

2. Method (300) according to claim 1, wherein the first truck information (86) comprises at least one first truck value (100) and the first trailer information (94) comprises at least one trailer brake air pressure value (102), wherein
the predefined requirements (108) comprise a first truck value threshold value (110) and a trailer brake air pressure threshold value (112), a trailer brake air pressure slope value (114) or a trailer brake air pressure amount (116), wherein
the requirements (108) are met if during the check the first truck value (100) are on or above the first truck value threshold value (110) and the trailer brake air pressure value (102)
i) rise over the trailer brake air pressure threshold value (112) or
ii) rise with a slope above the trailer brake air pressure slope value (114) or
iii) rise more than the trailer brake air pressure amount (116) and
otherwise the requirements are unmet.

3. Method (300) according to claim 1, wherein the first truck information (86) comprises at least one first truck value (100) and the first trailer information correspond (94) to pressure behavior information (104) indicating that one or more trailer brake air pressure values (102)
i) rise over the trailer brake air pressure threshold value (112) or
ii) rise with a slope above the trailer brake air pressure slope value (114) or
iii) rise more than a trailer brake air pressure amount (116) or
iv) behave different from i), ii) and iii),
wherein the requirements (108) are met when during the check the first truck value (100) is on or above the first truck value threshold value (110) and the pressure behavior information (104) indicating i), ii) or iii) and wherein the requirements (108) are unmet, when the first truck value (100) is below the first truck value threshold value (110) and/or the pressure behavior information (104) indicating iv).

4. Method (300) according to claim 2 or 3, wherein the first truck value (100) corresponds to a combustion engine speed value (62) and the first truck value threshold value (110) corresponds to an engine speed threshold value (110a) or
the first truck value (100) corresponds to a pressure value (60) of a truck brake air supply (34) or a truck brake air supply reservoir (56) and the
first truck value threshold value (100) corresponds to a truck air brake air threshold value (110b)and/or the trailer brake air pressure value (102) corresponds to a pressure value (66) in a trailer brake air supply (48) or a trailer brake air supply reservoir (50).

5. Method (300) according to any of the previous claims, wherein the first truck information (86) further comprise at least one second truck value (101) corresponding to a driving speed value (103) of the towing vehicle (12) and the predefined requirements (108) comprise a second truck value threshold value (111) which corresponds to zero, wherein the requirements (108) are met, if during the check the second truck value (101) correspond to the second truck value threshold value (111) and the requirements (108) are unmet, when the second truck value (101) is different from the second truck value threshold value (111).

6. Method (300) according to any of the previous claims, wherein the truck data (24) comprise second truck information (88) indicative of a at least one truck time stamp (118) and the trailer data (26) comprise second trailer information (96) indicative of at least one trailer time stamp (120), wherein the or each truck time stamp (118) is assigned to the first truck information (86) or one of the first truck values (100) in the first truck information (86) and the or each trailer time stamp (120) is assigned to the first trailer information (94) or to one of the trailer air brake pressure values (102) in the first trailer information (94).

7. Method (300) according to any of the previous claims, wherein the truck data (24) comprise third truck (90) information indicative of a at least one truck location (76) and the trailer data (26) comprise third trailer information (98) indicative of at least one trailer location (82) an wherein the requirements (108) are met when during the check a distance between at the at least one truck location (76) and the at least one trailer location (82) is below a predefined distance value (122), preferably the predefined distance value (122) is a value below 30 meter or below 20 meter, and are unmet otherwise.

8. Method (300) according to claim 7, wherein the third truck information (90) is provided by a global navigation satellite system receiver (72), GPSS-receiver, like a global position system receiver (74), GPS-receiver, of the towing vehicle (12) and the third trailer information (98) is provided by a global navigation satellite system receiver (78), GPSS-receiver, like a global position system receiver (80), GPS-receiver, of the trailer vehicle (14).

9. Method (300) according to any of the previous claims, wherein the check, is executed in time intervals (318) or when first trailer information (94) are received indicating a rising trailer brake air pressure value (102).

10. Remote central unit (16) which is arranged to execute steps according to any of the previous claims.

11. Trailer vehicle (14) comprising a trailer telematics device (22) for providing trailer data (26) to a remote central unit (16), preferably according to claim 10, comprising first trailer information (94) indicative of brake air status (107) of the trailer vehicle (14), wherein the trailer vehicle (14) comprises a trailer pressure sensor (64) to provide
i) brake air pressure values (66) corresponding to a pressure in a trailer brake air supply (48) or a trailer brake air supply reservoir (50) as the first trailer information or
ii) brake air pressure values (66) corresponding to a pressure in a trailer brake air supply (48) or a trailer brake air supply reservoir (50) to an electronic control unit (68) of the trailer vehicle (14), wherein the electronic control unit (68) is arranged for providing pressure behavior information (70) as the first trailer information (94) based on the brake air pressure values (66).

12. Towing vehicle (12) comprising a truck telematics device (20) for providing truck data (24) comprising first truck information (86) indicative of status (105) of the towing vehicle (12), wherein the towing vehicle (12) comprises a truck pressure sensor (56) to provide brake air pressure values (60) corresponding to a pressure in a truck brake air supply (34) or a truck brake air supply reservoir (36) as the first truck information (86) or a combustion engine speed sensor (58) to provide combustion engine speed values (62) corresponding to the first truck information (86).

13. Combination (200) comprising a trailer vehicle (14) according to claim 11 and a towing vehicle (12) according to claim 12.

14. System (10) comprising a remote central unit (16) according to claim 10 and a trailer vehicle (14) according to claim 11 or a towing vehicle (12) according to claim 12.
